# EUROPEAN PATENT APPLICATION

(11) **EP 4 768 875 A1**
(43) Date of publication of application: **01.07.2026**
(21) Application number: 24916739.6
(22) Date of filing: 25.12.2024
(51) Int. Cl.: G01J 1/44

(54) **METHOD AND APPARATUS FOR DETECTING FLICKER FREQUENCY OF AMBIENT LIGHT SOURCE, AND ELECTRONIC DEVICE**

(30) Priority: 09.01.2024 CN 202410034448
(71) Applicant: Honor Device Co., Ltd., Shenzhen, Guangdong 518040 (CN)
(72) Inventor: DENG, Jun, Shenzhen, Guangdong 518040 (CN); FENG, Xiaogang, Shenzhen, Guangdong 518040 (CN)
(74) Representative: Henselmann, Alexander Gerhard
(86) International application number: PCT/CN2024/142465
(87) International publication number: WO 2025/148692

(57) **Abstract**

Embodiments of this application relate to the field of terminals, and provide a method and an apparatus for detecting a flicker frequency of an ambient light source, and an electronic device, so as to detect the flicker frequency of the ambient light source with high detection precision and low costs. The electronic device includes a light intensity sensing module, an analog-to-digital conversion module, and a data processing module. The light intensity sensing module is connected to the analog-to-digital conversion module. The analog-to-digital conversion module is connected to the data processing module. The light intensity sensing module includes a photodiode. The light intensity sensing module is configured to detect a light intensity signal of an ambient light source, and convert the light intensity signal into an analog voltage signal. The analog-to-digital conversion module is configured to convert the analog voltage signal into a digital voltage signal. The analog-to-digital conversion module is an audio chip. The audio chip is connected to a microphone and/or a loudspeaker. The data processing module is configured to calculate a flicker frequency of an ambient light source based on the digital voltage signal.

## Description

This application claims priority to Chinese Patent Application No. 202410034448.9, filed with the China National Intellectual Property Administration on January 9, 2024 and entitled "METHOD AND APPARATUS FOR DETECTING FLICKER FREQUENCY OF AMBIENT LIGHT SOURCE, AND ELECTRONIC DEVICE", which is incorporated herein by reference in its entirety.

### TECHNICAL FIELD

Embodiments of this application relate to the field of terminals, and in particular, to a method and an apparatus for detecting a flicker frequency of an ambient light source, and an electronic device.

### BACKGROUND

Currently, in a light source flicker (flicker) scene, for example, in a scene with a light source such as an incandescent light bulb or a screen driven by a 50 Hz alternating current (AC), an electronic device easily captures water ripples (debanding) during photography. To eliminate the water ripples, a flicker frequency of a light source may be detected, and a parameter of a camera is adjusted based on the flicker frequency of the light source, to eliminate the water ripples.

In the related art, an integrated ambient light sensor may be mounted in an electronic device, and the flicker frequency of the light source is detected through the integrated ambient light sensor. However, the integrated ambient light sensor has relatively low precision and a relatively low sampling rate, resulting in a poor frequency detection effect of a light source signal.

### SUMMARY

Embodiments of this application provide a method and an apparatus for detecting a flicker frequency of an ambient light source, and an electronic device, so as to detect the flicker frequency of the ambient light source with high detection precision and low costs.

To achieve the foregoing objective, the following technical solutions are used in embodiments of this application.

According to a first aspect, an electronic device is provided, including a light intensity sensing module, an analog-to-digital conversion module, and a data processing module. The light intensity sensing module is connected to the analog-to-digital conversion module. The analog-to-digital conversion module is connected to the data processing module. The light intensity sensing module includes a photodiode (Photo-Diode, PD). The light intensity sensing module is configured to detect a light intensity signal of an ambient light source, and convert the light intensity signal into an analog voltage signal. The analog-to-digital conversion module is configured to convert the analog voltage signal into a digital voltage signal. The analog-to-digital conversion module is an audio chip. The audio chip is connected to a microphone and/or a loudspeaker. The data processing module is configured to calculate a flicker frequency of an ambient light source based on the digital voltage signal.

In the solution provided in embodiments of this application, the audio chip (for example, an audio codec or an ADC) may be multiplexed to process an analog signal (an analog voltage signal corresponding to the light intensity signal of the ambient light source) to obtain a digital signal (the digital voltage signal), and then the flicker frequency of the ambient light source is calculated based on the digital voltage signal. Since the audio chip has a high sampling rate (for example, 8-192 KHz) and high quantization precision (for example, > = 24 Bit), the flicker frequency of the ambient light source can be effectively detected with high detection precision and without additional costs (that is, low costs).

In a possible implementation, the electronic device further includes an application processor AP and a camera. The data processing module is further configured to send the flicker frequency of the ambient light source to the AP. The AP is configured to set a parameter of the camera based on the flicker frequency of the ambient light source. The parameter of the camera includes an exposure time and/or a frame rate. In this way, the parameter of the camera may be adjusted based on the detected flicker frequency of the ambient light source, to eliminate water ripples in an image captured by the camera.

In a possible implementation, the audio chip includes an audio codec or an audio analog-to-digital converter ADC. Since the audio codec or the audio analog-to-digital converter ADC has a high sampling rate and high quantization precision, the flicker frequency of the ambient light source can be effectively detected with high detection precision and without additional costs.

In a possible implementation, the data processing module is an audio digital signal processor. To be specific, the audio digital signal processor may be multiplexed to calculate the digital voltage signal to obtain the flicker frequency of the ambient light source, which has high calculation efficiency and does not require additional costs.

In a possible implementation, the analog-to-digital conversion module is configured to perform high-pass filtering processing on the analog voltage signal to obtain an alternating current (AC) voltage signal, then amplify the AC voltage signal, and perform analog-to-digital conversion on the amplified AC voltage signal to obtain the digital voltage signal. In this way, a direct current (DC) signal that does not contribute to light source frequency detection may be filtered, the AC signal may be amplified, and detection of a fluctuating signal may be enhanced, thereby better detecting strobing of an AC light source.

In a possible implementation, the light intensity sensing module includes the photodiode, a first sampling resistor, a first capacitor, and a second capacitor. A cathode of the photodiode is connected to a bias voltage, an anode of the photodiode is connected to one end of the first sampling resistor, an other end of the first sampling resistor is DC-grounded, one end of the second capacitor is connected to the anode of the photodiode, an other end of the second capacitor is AC-grounded, one end of the first capacitor is connected to the other end of the first sampling resistor, and an other end of the first capacitor is AC-grounded. In this way, the light intensity signal of the ambient light source may be detected through the photodiode, and the light intensity signal is converted into an analog voltage signal through a device such as the first sampling resistor.

In a possible implementation, the light intensity sensing module further includes a first magnetic bead and a second magnetic bead. An end of the first magnetic bead is connected to the end of the second capacitor and the anode of the photodiode, and an end of the second magnetic bead is connected to the end of the first capacitor and the other end of the first sampling resistor. The first magnetic bead and the second magnetic bead can achieve effects of suppressing high-frequency noise and spike interference, and absorbing electrostatic pulses.

In a possible implementation, the light intensity sensing module includes the photodiode, a second sampling resistor, and a first operational amplifier. A cathode of the photodiode is connected to one end of the second sampling resistor and an inverting input terminal of the first operational amplifier, an anode of the photodiode is grounded, an other end of the second sampling resistor is connected to an output terminal of the first operational amplifier, and a non-inverting input terminal of the first operational amplifier is grounded. In this way, the light intensity signal of the ambient light source may be detected through the photodiode, and the light intensity signal is converted into an analog voltage signal through a device such as the second sampling resistor.

In a possible implementation, the light intensity sensing module includes the photodiode, a second operational amplifier, and a charging capacitor. A cathode of the photodiode is connected to one end of the charging capacitor and an inverting input terminal of the second operational amplifier, an anode of the photodiode is grounded, an other end of the charging capacitor is connected to an output terminal of the second operational amplifier, and a non-inverting input terminal of the second operational amplifier is connected to a bias voltage. In this way, the light intensity signal of the ambient light source may be detected through the photodiode, and the light intensity signal is converted into an analog voltage signal through a device such as the charging capacitor.

In a possible implementation, the analog-to-digital conversion module includes a high-pass filter, a programmable gain amplifier (pmgrammable gain amplifier, PGA), an analog-to-digital converter, and a data transmission module. An input terminal of the high-pass filter is connected to an output terminal of the light intensity sensing module, an output terminal of the high-pass filter is connected to an input terminal of the PGA, an output terminal of the PGA is connected to an input terminal of the analog-to-digital converter, an output terminal of the analog-to-digital converter is connected to an input terminal of the data transmission module, and an output terminal of the data transmission module is connected to the data processing module. The high-pass filter is configured to receive the analog voltage signal from the output terminal of the light intensity sensing module. The high-pass filter is configured to filter a DC voltage signal of the analog voltage signal to obtain an AC voltage signal. The PGA is configured to amplify the AC voltage signal. The analog-to-digital converter is configured to convert the amplified AC voltage signal into a digital voltage signal. The data transmission module is configured to send the digital voltage signal to the data processing module through a bus. In this way, a DC signal that does not contribute to light source frequency detection may be filtered, the AC signal may be amplified, and detection of a fluctuating signal may be enhanced, thereby better detecting strobing of an AC light source.

In a possible implementation, the analog-to-digital conversion module includes a programmable gain amplifier, an analog-to-digital converter, and a data transmission module. An input terminal of the PGA is connected to an output terminal of the light intensity sensing module, an output terminal of the PGA is connected to an input terminal of the analog-to-digital converter, an output terminal of the analog-to-digital converter is connected to an input terminal of the data transmission module, and an output terminal of the data transmission module is connected to the data processing module. The PGA is configured to receive the analog voltage signal from the output terminal of the light intensity sensing module and amplify the analog voltage signal. The analog-to-digital converter is configured to convert the amplified analog voltage signal into a digital voltage signal. The data transmission module is configured to send the digital voltage signal to the data processing module through a bus.

According to a second aspect, an apparatus for detecting a flicker frequency of an ambient light source is provided, including a light intensity sensing module, an analog-to-digital conversion module, and a data processing module. The light intensity sensing module is connected to the analog-to-digital conversion module. The analog-to-digital conversion module is connected to the data processing module. The light intensity sensing module includes a photodiode. The light intensity sensing module is configured to detect a light intensity signal of an ambient light source, and convert the light intensity signal into a voltage signal. The analog-to-digital conversion module is configured to convert the analog voltage signal into a digital voltage signal. The data processing module is configured to calculate a flicker frequency of an ambient light source based on the digital voltage signal.

According to the apparatus for detecting a flicker frequency of an ambient light source provided in this embodiment of this application, the light intensity signal of the ambient light source may be detected through the light intensity sensing module, the light intensity signal is converted into the voltage signal, the analog voltage signal is converted into the digital voltage signal through the analog-to-digital conversion module, and the flicker frequency of the ambient light source is calculated based on the digital voltage signal through the data processing module. In this way, the flicker frequency of the ambient light source can be effectively detected. The parameter of the camera may be adjusted based on the detected flicker frequency of the ambient light source, to eliminate water ripples in an image captured by the camera.

In a possible implementation, the analog-to-digital conversion module is configured to perform high-pass filtering processing on the analog voltage signal to obtain an AC voltage signal, then amplify the AC voltage signal, and perform analog-to-digital conversion on the amplified AC voltage signal to obtain the digital voltage signal.

In a possible implementation, the light intensity sensing module includes the photodiode, a first sampling resistor, a first capacitor, and a second capacitor. A cathode of the photodiode is connected to a bias voltage, an anode of the photodiode is connected to one end of the first sampling resistor, an other end of the first sampling resistor is DC-grounded, one end of the second capacitor is connected to the anode of the photodiode, an other end of the second capacitor is AC-grounded, one end of the first capacitor is connected to the other end of the first sampling resistor, and an other end of the first capacitor is AC-grounded.

In a possible implementation, the light intensity sensing module further includes a first magnetic bead and a second magnetic bead. An end of the first magnetic bead is connected to the end of the second capacitor and the anode of the photodiode, and an end of the second magnetic bead is connected to the end of the first capacitor and the other end of the first sampling resistor.

In a possible implementation, the light intensity sensing module includes the photodiode, a second sampling resistor, and a first operational amplifier. A cathode of the photodiode is connected to one end of the second sampling resistor and an inverting input terminal of the first operational amplifier, an anode of the photodiode is grounded, an other end of the second sampling resistor is connected to an output terminal of the first operational amplifier, and a non-inverting input terminal of the first operational amplifier is grounded.

In a possible implementation, the light intensity sensing module includes the photodiode, a second operational amplifier, and a charging capacitor. A cathode of the photodiode is connected to one end of the charging capacitor and an inverting input terminal of the second operational amplifier, an anode of the photodiode is grounded, an other end of the charging capacitor is connected to an output terminal of the second operational amplifier, and a non-inverting input terminal of the second operational amplifier is connected to a bias voltage.

In a possible implementation, the analog-to-digital conversion module includes a high-pass filter, a programmable gain amplifier, an analog-to-digital converter, and a data transmission module. An input terminal of the high-pass filter is connected to an output terminal of the light intensity sensing module, an output terminal of the high-pass filter is connected to an input terminal of the PGA, an output terminal of the PGA is connected to an input terminal of the analog-to-digital converter, an output terminal of the analog-to-digital converter is connected to an input terminal of the data transmission module, and an output terminal of the data transmission module is connected to the data processing module. The high-pass filter is configured to receive the analog voltage signal from the output terminal of the light intensity sensing module. The high-pass filter is configured to filter a DC voltage signal of the analog voltage signal to obtain an AC voltage signal. The PGA is configured to amplify the AC voltage signal. The analog-to-digital converter is configured to convert the amplified AC voltage signal into a digital voltage signal. The data transmission module is configured to send the digital voltage signal to the data processing module through a bus.

In a possible implementation, the analog-to-digital conversion module includes a programmable gain amplifier, an analog-to-digital converter, and a data transmission module. An input terminal of the PGA is connected to an output terminal of the light intensity sensing module, an output terminal of the PGA is connected to an input terminal of the analog-to-digital converter, an output terminal of the analog-to-digital converter is connected to an input terminal of the data transmission module, and an output terminal of the data transmission module is connected to the data processing module. The PGA is configured to receive the analog voltage signal from the output terminal of the light intensity sensing module and amplify the analog voltage signal. The analog-to-digital converter is configured to convert the amplified analog voltage signal into a digital voltage signal. The data transmission module is configured to send the digital voltage signal to the data processing module through a bus.

According to a third aspect, a method for detecting a flicker frequency of an ambient light source is provided, applied to an electronic device. The electronic device includes a light intensity sensing module, an analog-to-digital conversion module, and a data processing module. The light intensity sensing module includes a photodiode. The light intensity sensing module is connected to the analog-to-digital conversion module. The analog-to-digital conversion module is connected to the data processing module. The method includes: The light intensity sensing module detects a light intensity signal of an ambient light source, and converts the light intensity signal into a voltage signal. The analog-to-digital conversion module converts the voltage signal into a digital voltage signal. The analog-to-digital conversion module is an audio chip, and the audio chip is connected to a microphone and/or a loudspeaker. The data processing module calculates a flicker frequency of the ambient light source based on the digital voltage signal.

According to the method for detecting a flicker frequency of an ambient light source provided in this embodiment of this application, the light intensity signal of the ambient light source may be detected through the light intensity sensing module, the light intensity signal is converted into the voltage signal, the analog voltage signal is converted into the digital voltage signal through the analog-to-digital conversion module, and the flicker frequency of the ambient light source is calculated based on the digital voltage signal through the data processing module. In this way, the flicker frequency of the ambient light source can be effectively detected. The parameter of the camera may be adjusted based on the detected flicker frequency of the ambient light source, to eliminate water ripples in an image captured by the camera.

According to a fourth aspect, a computer-readable storage medium is provided, including a computer instruction, the computer instruction, when run on an electronic device, causing the electronic device to perform the method according to the third aspect.

According to a fifth aspect, a computer program product including an instruction is provided, the instruction, when run on an electronic device, causing the electronic device to perform the method according to the third aspect.

For the technical effects according to the second aspect to the fifth aspect, reference is made to the technical effects of the first aspect and any implementation thereof, and details are not described herein again.

### BRIEF DESCRIPTION OF DRAWINGS

FIG. 1 is a schematic diagram of a module according to an embodiment of this application;
FIG. 2 is a schematic structural diagram of an electronic device according to an embodiment of this application;
FIG. 3 is a schematic structural diagram of another electronic device according to an embodiment of this application;
FIG. 4 is a schematic diagram of a circuit connection of a light intensity sensing module according to an embodiment of this application;
FIG. 5 is a schematic diagram of a circuit connection of an analog-to-digital conversion module according to an embodiment of this application;
FIG. 6 is a schematic diagram of a circuit connection of another analog-to-digital conversion module according to an embodiment of this application;
FIG. 7A, FIG. 7B, FIG. 7C, and FIG. 7D are schematic diagrams of a shooting scenes according to an embodiment of this application;
FIG. 8 is a schematic flowchart of a method for detecting a flicker frequency of an ambient light source according to an embodiment of this application;
FIG. 9 is a schematic diagram of a spectrogram according to an embodiment of this application;
FIG. 10A, FIG. 10B, and FIG. 10C are schematic diagrams of displays according to an embodiment of this application;
FIG. 11 is a schematic diagram of a software and hardware architecture of an electronic device according to an embodiment of this application; and
FIG. 12 is a schematic structural diagram of a chip system according to an embodiment of this application.

### DESCRIPTION OF EMBODIMENTS

For clarity and brevity of the following embodiments, related concepts or technologies are briefly described first.

Rolling shutter (rolling shutter): It refers to an exposure manner in which a camera performs scanning and exposure line by line until all pixels are exposed. Different rows of pixels have different exposure times.

Light source flicker (flicker) scene: It refers to a shooting scene (shooting environment) with flickering light sources. The flickering light source may include an alternating current (AC)-powered light source, for example, an indoor chandelier, a TV screen, or an electronic screen in a shopping mall or a high-speed rail station.

In a light source flicker (flicker) scene, an electronic device easily captures water ripples (debanding) during shooting in an exposure manner of a rolling shutter.

To eliminate the water ripples, a flicker frequency of a light source may be detected, and a parameter of a camera is adjusted based on the flicker frequency of the light source, to eliminate the water ripples.

In the related art, an integrated ambient light sensor may be mounted in an electronic device, and the flicker frequency of the light source is detected through the integrated ambient light sensor. However, the integrated ambient light sensor has relatively low precision and a relatively low sampling rate, resulting in a poor frequency detection effect of a light source signal.

Embodiments of this application provide an apparatus and a method for detecting a flicker frequency of an ambient light source, so as to detect the flicker frequency of the ambient light source with high detection precision and low costs.

Technical solutions in embodiments of this application are described below with reference to the accompanying drawings in embodiments of this application. In the description of this application, unless otherwise specified, "at least one" indicates one or more, and "a plurality of" indicates two or more. Moreover, to clearly describe the technical solutions in embodiments of this application, in embodiments of this application, terms such as "first" and "second" are used to distinguish between same items or similar items whose functions and effects are substantially the same. A person skilled in the art may understand that the terms such as "first" and "second" do not limit a quantity and an execution order, and the terms such as "first" and "second" are not limited to be unnecessarily different.

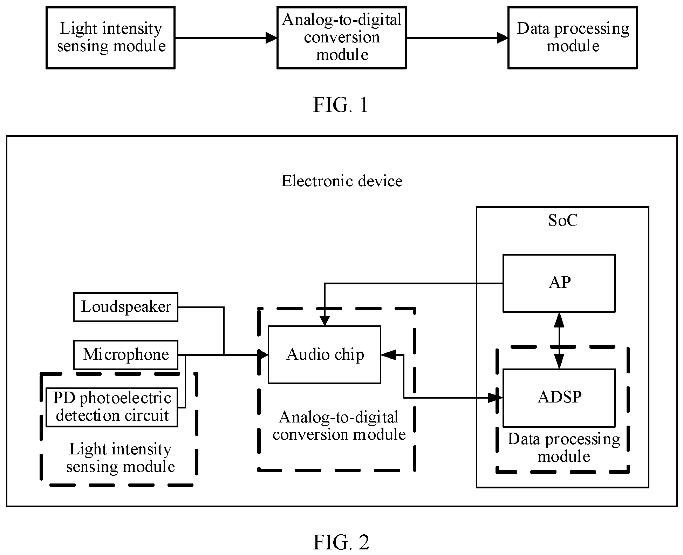

As shown in FIG. 1, an embodiment of this application provides an apparatus for detecting a flicker frequency of an ambient light source. The apparatus may include three parts, which are respectively a light intensity sensing module, an analog-to-digital conversion module, and a data processing module. The light intensity sensing module is connected to the analog-to-digital conversion module. The analog-to-digital conversion module is connected to the data processing module.

The light intensity sensing module includes a photodiode PD. The light intensity sensing module is configured to detect a light intensity signal of an ambient light source, and convert the light intensity signal into a voltage signal (an analog voltage signal).

The analog-to-digital conversion module is configured to convert the voltage signal (the analog voltage signal) into a digital voltage signal.

The data processing module is configured to calculate a flicker frequency of the ambient light source based on the digital voltage signal.

In some embodiments, the foregoing apparatus for detecting a flicker frequency of an ambient light source may be applied to an electronic device.

As shown in FIG. 2, the electronic device may include modules such as an audio chip, a loudspeaker, a microphone, a PD photoelectric detection circuit, and an SoC. The SoC may include an ADSP and an application processor AP. To be specific, the ADSP and the AP may be integrated on the SoC.

In this embodiment of this application, the audio chip may be used as the analog-to-digital conversion module. The audio chip may be connected to the PD photoelectric detection circuit. The PD photoelectric detection circuit may be used as the light intensity sensing module, and is configured to detect a light intensity signal of an ambient light source and convert the light intensity signal into an analog voltage signal. The audio chip may be configured to convert the analog voltage signal into a digital voltage signal. The audio chip may be further connected to the microphone and/or the loudspeaker.

In this embodiment of this application, an audio (Audio) digital signal processor (digital singnal processor, DSP) of the electronic device may be used as the data processing module. The audio DSP may also be referred to as an ADSP. The audio DSP may process the digital voltage signal through a fast Fourier transform (fast Fourier transform, FFT) algorithm, to obtain flicker frequencies of one or more ambient light sources.

Optionally, the data processing module may further send frequency information (the flicker frequencies of the one or more ambient light sources) to the application processor AP. To be specific, the audio DSP may send the frequency information obtained through calculation (the flicker frequencies of the one or more ambient light sources) to the application processor (AP), and the AP may set a parameter (for example, an exposure time) of a camera based on the received frequency information, to eliminate water ripples.

This application further provides an electronic device (for example, an electronic device 100) using the foregoing apparatus for detecting a flicker frequency of an ambient light source.

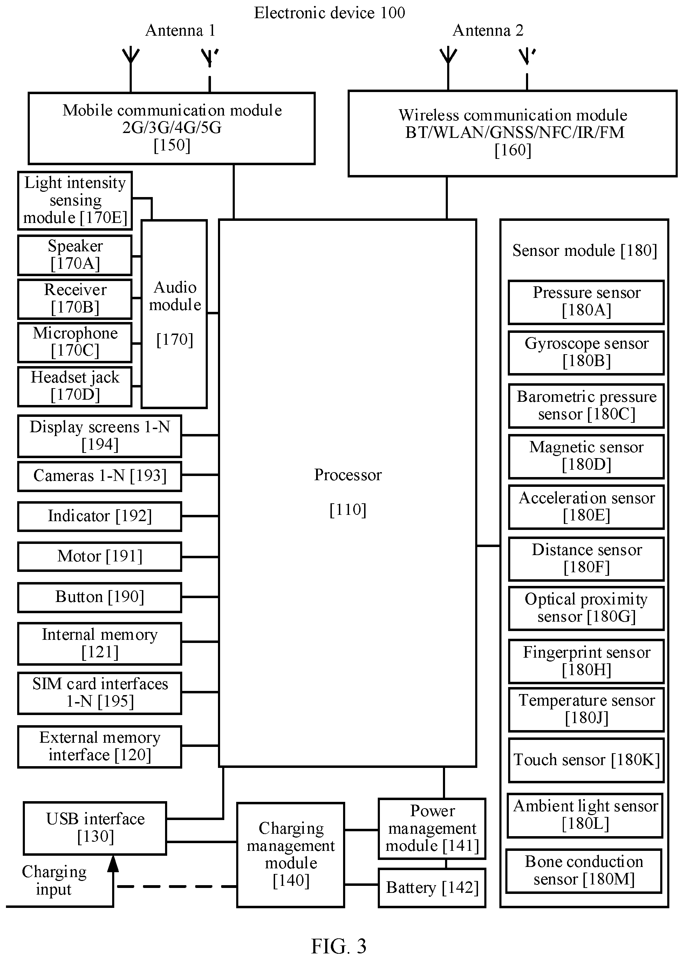

FIG. 3 is a schematic structural diagram of an electronic device 100 according to an embodiment of this application. As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a light intensity sensing module 170E, a sensor module 180, a button 190, a motor 191, an indicator 192, a camera 193, a display screen 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the structure shown in this embodiment constitutes no specific limitation on the electronic device 100. In some other embodiments, the electronic device 100 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, an audio (audio) digital signal processor (digital signal processor, DSP), a baseband processor, and/or a neural-network processing unit (neural-network processing unit, NPU). Different processing units may be independent devices, or may be integrated into one or more processors.

The charging management module 140 is configured to receive a charging input from a charger. The charging management module 140 may further supply power to the electronic device through a power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. In some other embodiments, the power management module 141 may alternatively be arranged in the processor 110. In some other embodiments, the power management module 141 and the charging management module 140 may also be arranged in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed to increase a utilization rate of the antennas. For example, the antenna 1 may be multiplexed into a diversity antenna of a wireless local area network.

The mobile communication module 150 may provide a solution to wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal modulated by the modem processor, and convert the signal into an electromagnetic wave through the antenna 1 for radiation.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (not limited to the speaker 170A, the receiver 170B, and the like), or displays an image or a video through the display screen 194.

The wireless communication module 160 may provide wireless communication solutions applied to the electronic device 100, including WLAN (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC), an infrared (infrared, IR) technology, and the like. The wireless communication module 160 may be one or more devices that integrate at least one communication processing module. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert the to-be-sent signal into an electromagnetic wave through the antenna 2 for radiation.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display screen 194, the application processor, and the like. The GPU is a microprocessor for image processing, and is connected to the display screen 194 and the application processor. The GPU is configured to perform mathematical and geometric computations for graphics rendering. The processor 110 may include one or more GPUs, and is configured to execute program instructions to generate or change display information.

The display screen 194 is configured to display an image, a video, and the like. The display screen 194 includes a display panel. The display panel may be a liquid crystal display (liquid crystal display, LCD), a light-emitting diode (light-emitting diode, LED), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The electronic device 100 may implement a photographing function through the ISP, the camera 193, the video codec, the GPU, the display screen 194, the application processor, and the like. The ISP is configured to process data fed back by the camera 193. The camera 193 is configured to capture a static image or a video. The digital voltage signal processor is configured to process a digital voltage signal. In addition to a digital image signal, the digital signal processor may further process another digital voltage signal. The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The camera 193 may include 1-N cameras. Each camera includes a photosensitive element (CCD/CMOS). Sensitization may be performed through the photosensitive element (CCD/CMOS), and photos are collected and converted into electric charges.

For example, the electronic device may include 2 front cameras and 3 rear cameras. The front cameras may include a front main camera and a TOF camera. The TOF camera may include a TX and an RX. The TX may be configured to transmit an optical signal (infrared light or a laser pulse), and the RX may be configured to receive a formed image. The TX may be, for example, an infrared light emitter. The RX may be, for example, a complementary metal oxide semiconductor (complementary metal oxide semiconductor, CMOS) or a charge coupled device (charge coupled device, CCD) image sensor. Optionally, the front camera may further include a front secondary camera.

The rear camera, for example, may include a rear main camera, a wide-angle camera (referred to as an ultra-wide-angle camera), and a telephoto camera. Certainly, the rear camera may further include another type of camera, for example, may further include a depth camera module, a black and white camera module, and a macro camera module. This is not limited in this application. The rear main camera lens may be a wide-angle camera. The rear main camera and the ultra-wide-angle camera may have different viewing angles.

The external memory interface 120 may be configured to connect to an external storage card such as a micro SD card, to expand a storage capacity of the electronic device 100. The external storage card communicates with the processor 110 through the external memory interface 120, to implement a data storage function. For example, files such as music and a video are stored into the external storage card. The internal memory 121 may be configured to store computer-executable program code. The executable program code includes instructions. The processor 110 executes various function applications and data processing of the electronic device 100 by running the instruction stored in the internal memory 121. For example, in this embodiment of this application, the processor 110 may execute the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and an address book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function through the audio module 170, the speaker 170A, the receiver 170B, the microphone 170C, the headset jack 170D, the application processor, and the like, for example, music playback and recording.

The audio module 170 is configured to convert digital audio information into analog audio signal output, and is also configured to convert analog audio input into a digital audio signal. The audio module 170 may be further configured to encode and decode an audio signal. The speaker 170A, also referred to as a "loudspeaker", is configured to convert an electrical audio signal into a sound signal. The receiver 170B, also referred to as "handset", is configured to convert an electrical audio signal into a sound signal. The microphone 170C, also referred to as a "voice tube" or "mike", is configured to convert a sound signal into an electrical signal. The headset jack 170D is configured to connect to a wired headset.

In this embodiment of this application, the audio module 170 may be an audio chip. The audio chip may be, for example, an audio codec (Audio codec) or an audio analog-to-digital converter ADC.

The light intensity sensing module 170E includes a photodiode and is configured to convert a light intensity signal of an ambient light source into an analog voltage signal.

In embodiments of this application, the audio module 170 is further configured to sample, quantize, and encode the analog voltage signal from the light intensity sensing module 170E to obtain a digital voltage signal.

In embodiments of this application, the audio module 170 may send the digital voltage signal to an audio DSP in the processor 110. The audio DSP may be used as a data processing module. The audio DSP may process the digital voltage signal through an FFT algorithm and a peak searching algorithm to obtain one or more flicker frequencies (each flicker frequency corresponds to one ambient light source).

Further, the audio DSP in the processor 110 may send frequency information (the flicker frequencies of one or more ambient light sources) to the application processor in the processor 110. The application processor may set a parameter (for example, an exposure time) of a camera based on the received frequency information, to eliminate water ripples.

The button 190 includes a power button, a volume button, and the like. The button 190 may be a mechanical button, or a touch button. The electronic device 100 may receive a button input, and generate a button signal input related to user setting and function control of the electronic device 100. The motor 191 may generate a vibration prompt. The motor 191 may be configured to provide a vibration prompt for an incoming call, or may be configured to provide vibration feedback for touch. The indicator 192 may be an indicator light, and may be configured to indicate a charging state or a battery change, or may be configured to indicate a message, a missed call, a notification, and the like. The SIM card interface 195 is configured to connect a SIM card. The SIM card may be inserted into the SIM card interface 195 or plugged from the SIM card interface 195, to come into contact with or be separated from the electronic device 100. The electronic device 100 may support 1 or N SIM card interfaces, where N is a positive integer greater than 1. The SIM card interface 195 may support a Nano SIM card, a Micro SIM card, a SIM card, or the like.

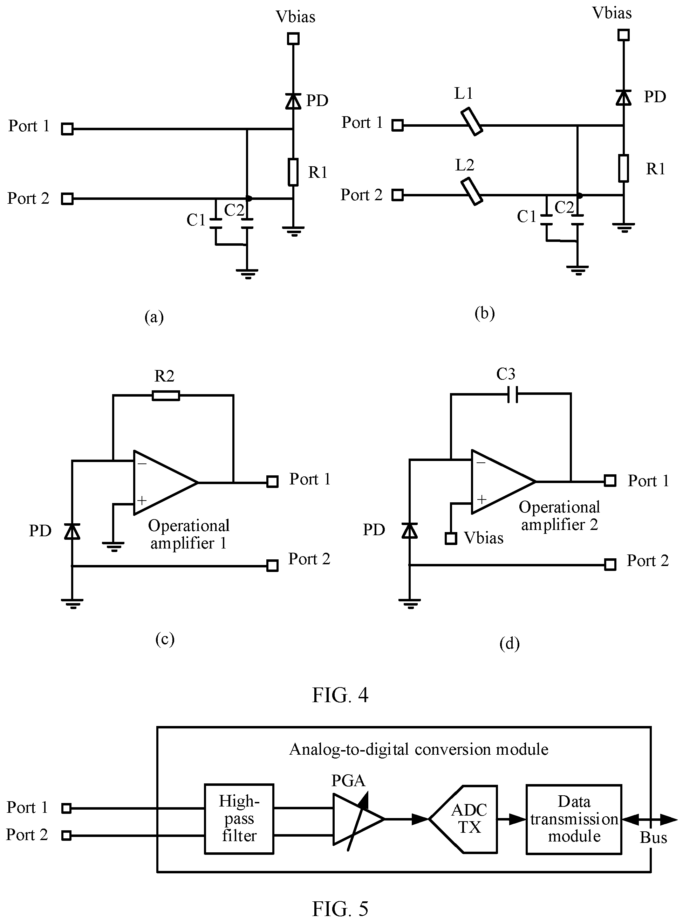

For example, FIG. 4 provides an expanded description of a light intensity sensing module.

As shown in (a) of FIG. 4, a schematic diagram of a circuit connection of the light intensity sensing module (that is, a PD photoelectric detection circuit) is shown. As shown in (a) of FIG. 4, the light intensity sensing module may include a photodiode PD, a sampling resistor R1 (a first sampling resistor), a filter capacitor C1 (a first capacitor), and C2 (a second capacitor). A cathode (a negative electrode) of the photodiode PD is connected to a bias voltage Vbias. An anode (a positive electrode) of the photodiode PD is connected to one end of the sampling resistor R1, and an other end of the sampling resistor R1 is DC-grounded. One end of the filter capacitor C1 is connected to a port 2 and the other end of the resistor R1, and an other end of the filter capacitor C1 is AC-grounded. One end of the filter capacitor C2 is connected to the anode of the photodiode PD, and the port 1, and an other end of the filter capacitor C2 is AC-grounded. The port 1 is an analog voltage signal, and the port 2 is a ground signal.

As shown in (b) of FIG. 4, a schematic diagram of a circuit connection of the light intensity sensing module (that is, a PD photoelectric detection circuit) is shown. As shown in (b) of FIG. 4, the light intensity sensing module may include a photodiode PD, a sampling resistor R1, filter capacitors C1 and C2, magnetic beads L1 (a first magnetic bead) and L2 (a second magnetic bead), and the like. A cathode (a negative electrode) of the photodiode PD is connected to a bias voltage Vbias. An anode (a positive electrode) of the photodiode PD is connected to one end of the sampling resistor R1, and an other end of the sampling resistor R1 is DC-grounded. One end of the magnetic bead L1 is connected to one end of the filter capacitor C2 and the anode of the photodiode PD, and an other end of the filter capacitor C2 is AC-grounded. One end of the magnetic bead L2 is connected to one end of the filter capacitor C1 and the other end of the resistance R1, and an other end of the filter capacitor C1 is AC-grounded. An other end of the magnetic bead L1 is connected to the port 1, and an other end of the magnetic bead L2 is connected to the port 2. The port 1 is an analog voltage signal, and the port 2 is a ground signal. The magnetic beads L1 and L2 can achieve effects of suppressing high-frequency noise and spike interference, and absorbing electrostatic pulses.

As shown in (c) of FIG. 4, a schematic diagram of another circuit connection of the light intensity sensing module is shown. As shown in (c) of FIG. 4, the light intensity sensing module includes a photodiode PD, a sampling resistor R2 (a second sampling resistor), and an operational amplifier 1 (a first operational amplifier). A cathode of the photodiode PD is connected to one end of the sampling resistor R2 and an inverting input terminal of the operational amplifier 1. An anode of the photodiode PD is grounded. An other end of the sampling resistor R2 is connected to an output terminal of the operational amplifier 1. A non-inverting input terminal of the operational amplifier 1 is grounded. The port 1 is connected to an output port of the operational amplifier 1 and the end of the sampling resistor R2. The port 2 is connected to an anode terminal of the photodiode PD. The port 1 is an analog voltage signal, and the port 2 is a ground signal.

As shown in (d) of FIG. 4, a schematic diagram of still another circuit connection of the light intensity sensing module is shown. As shown in (d) of FIG. 4, the light intensity sensing module includes a photodiode PD, an operational amplifier 2 (a second operational amplifier), and a charging capacitor C3. A cathode of the photodiode PD is connected to one end of the charging capacitor C3 and an inverting input terminal of the operational amplifier 2. An anode of the photodiode PD is grounded. An other end of the charging capacitor C3 is connected to an output terminal of the operational amplifier 2. A non-inverting input terminal of the operational amplifier 2 is connected to a bias voltage Vbias. The port 1 is connected to an output port of the operational amplifier 2 and the end of the charging capacitor C3. The port 2 is connected to an anode terminal of the photodiode PD. The port 1 is an analog voltage signal, and the port 2 is a ground signal.

(a)-(d) in FIG. 4 are the schematic diagrams of the circuit connection of the light intensity sensing module. The circuit of the light intensity sensing module is not limited thereto. For example, in some possible implementations, the light intensity sensing module may include a plurality of photodiodes. Alternatively, the light intensity sensing module may further include another element. This is not specifically limited in this application.

For example, FIG. 5 to FIG. 6 provide an expanded description of an analog-to-digital conversion module.

In a possible design, as shown in FIG. 5, the analog-to-digital conversion module includes a high-pass filter, a programmable gain amplifier (PGA), an analog-to-digital converter (ADC TX), and a data transmission module. An input terminal of the high-pass filter is connected to an output terminal of the light intensity sensing module (that is, a port 1 and a port 2 of the light intensity sensing module). An output terminal of the high-pass filter is connected to an input terminal of the PGA. An output terminal of the PGA is connected to an input terminal of the analog-to-digital converter. An output terminal of the analog-to-digital converter is connected to an input terminal of the data transmission module. An output terminal of the data transmission module is connected to a data processing module.

The high-pass filter is connected to the port 1 and the port 2 of the light intensity sensing module. The high-pass filter may receive an analog voltage signal (that is, an analog voltage signal corresponding to a light intensity signal detected by a photodiode PD) from the port 1 and the port 2 of the light intensity sensing module.

The high-pass filter may perform filtering on a low-frequency direct current (DC) signal of the analog voltage signal, to obtain an AC voltage signal (a high-frequency AC voltage signal). In this way, the high-pass filter may filter a DC signal that does not contribute to light source frequency detection, and may enhance detection of a fluctuation signal (an AC signal).

It should be noted that the ambient light source may include a DC light source and an AC light source. Light emitted by the DC light source (for example, a DC-powered light bulb) is continuous and uniform light without flicker. Since a voltage and current direction of an AC continuously fluctuate at a certain frequency, luminance (that is, a light intensity signal) of the AC light source (for example, an AC-powered light bulb) also flickers with the fluctuation of the AC. The light intensity signal detected by the light intensity sensing module may include a light intensity signal of the DC light source and a light intensity signal of the AC light source. After the light intensity signal detected by the light intensity sensing module is converted into an analog voltage signal, the analog voltage signal may include a DC voltage signal and an AC voltage signal. The DC voltage signal corresponds to the light intensity signal of the DC light source, and the AC voltage signal corresponds to the light intensity signal of the AC light source. Since light emitted by the DC light source does not have flicker, the DC voltage signal does not contribute to detection of the flicker. Therefore, the DC voltage signal may be blocked, and the AC voltage signal is retained, to better detect the flicker of the AC light source. The DC voltage signal may be blocked through the high-pass filter. This is because the frequency of the DC signal is zero, the DC signal cannot pass through the high-pass filter, so that the high-pass filter can achieve the effect of blocking the DC.

The PGA may amplify a filtered signal (an AC voltage signal). The ADC TX may convert the amplified signal (an amplified AC voltage signal) into a digital voltage signal. The data transmission module is configured to transmit the digital voltage signal, and may send the digital voltage signal to a data processing module through a bus.

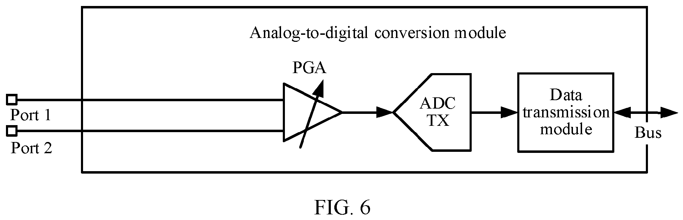

In another possible design, the analog-to-digital conversion module may not include the high-pass filter. For example, as shown in FIG. 6, the analog-to-digital conversion module includes a PGA, an analog-to-digital converter, and a data transmission module. An input terminal of the PGA is connected to an output terminal of the light intensity sensing module. An output terminal of the PGA is connected to an input terminal of the analog-to-digital converter. An output terminal of the analog-to-digital converter is connected to an input terminal of the data transmission module. An output terminal of the data transmission module is connected to the data processing module.

The PGA may receive analog voltage signals from a port 1 (that is, a port 1) and a port 2 (that is, a port 2). The PGA may amplify the analog voltage signal.

The analog-to-digital converter may sample and quantize the amplified analog voltage signal, so as to convert the analog voltage signal into a digital voltage signal.

The data transmission module may be responsible for transmitting the digital voltage signal, and sending the digital voltage signal to the data processing module through a bus.

The data processing module is configured to process the digital voltage signal. The data processing module may be an audio DSP. The audio DSP may analyze a frequency domain of the digital voltage signal through an FFT algorithm, to obtain flicker frequencies of one or more ambient light sources.

It may be understood that a process of converting the light intensity signal of the ambient light source into the digital voltage signal involved in embodiments of this application is similar to a recording process. During the recording, a microphone (also referred to as a "voice tube") may collect an analog sound signal, and convert the analog sound signal into an analog electrical signal. An audio module is configured to convert the analog electrical signal into a digital audio signal. Similarly, in the process of converting the light intensity signal of the ambient light source into the digital voltage signal, the light intensity sensing module may detect the light intensity signal of the ambient light source, and convert the light intensity signal into an analog voltage signal. The audio module may convert the analog voltage signal into a digital audio signal.

In a possible design, the analog-to-digital conversion module may be an audio codec or an audio ADC. The audio codec or the audio ADC may amplify, sample, quantize, and encode the analog voltage signal detected by the light intensity sensing module to obtain a digital voltage signal. The audio codec or the audio ADC has a high sampling rate (8-192 KHz), high quantization precision (> = 24 Bit), has a low-frequency cut-off function (that is, capable of blocking a low-frequency DC signal), and can detect a flicker frequency of an ambient light source with high detection precision. In addition, in this application, the audio codec or the ADC is multiplexed when the flicker frequency of the ambient light source is detected, without adding additional costs.

It should be noted that the audio codec or the audio ADC may be an independent chip, or may be integrated into another chip. For example, the audio codec may be integrated into a power management integrated circuit (power management integrated circuit, PMIC).

Certainly, the analog-to-digital conversion module is not limited to the audio chip (for example, the audio codec or the audio ADC). The analog-to-digital conversion module may be a module (or a chip) independent of the audio chip. This is not limited in this application.

The solution for detecting a flicker frequency of an ambient light source provided in embodiments of this application may be applied to at least one scene such as a local light source scene, a dark light scene, a high-frequency light source scene, or a mixed light source scene.

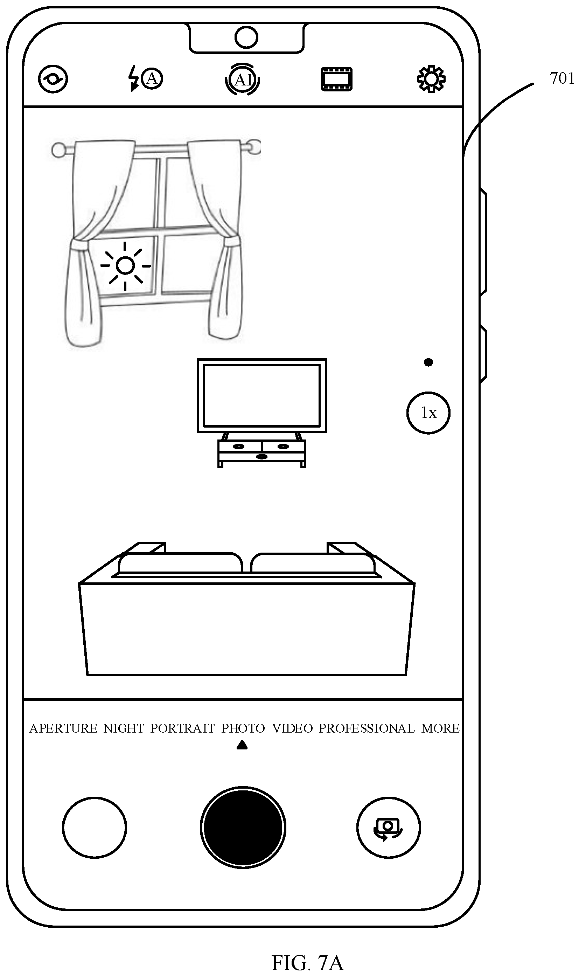

The local light source scene refers to a shooting scene where a local light source exists. For example, an example in which the electronic device is a mobile phone is used. As shown in FIG. 7A, a mobile phone may display a shooting preview interface 701. An image captured by a camera of the mobile phone is displayed on the shooting preview interface 701. It may be learned from the shooting preview interface 701 that a location corresponding to a current shooting scene is a living room, and light sources of the living room include natural light (sunlight) and a display screen of a television. The natural light may cover the entire living room, and light emitted by the display screen of the television covers part of the living room. The display screen of the television may be considered as a local light source.

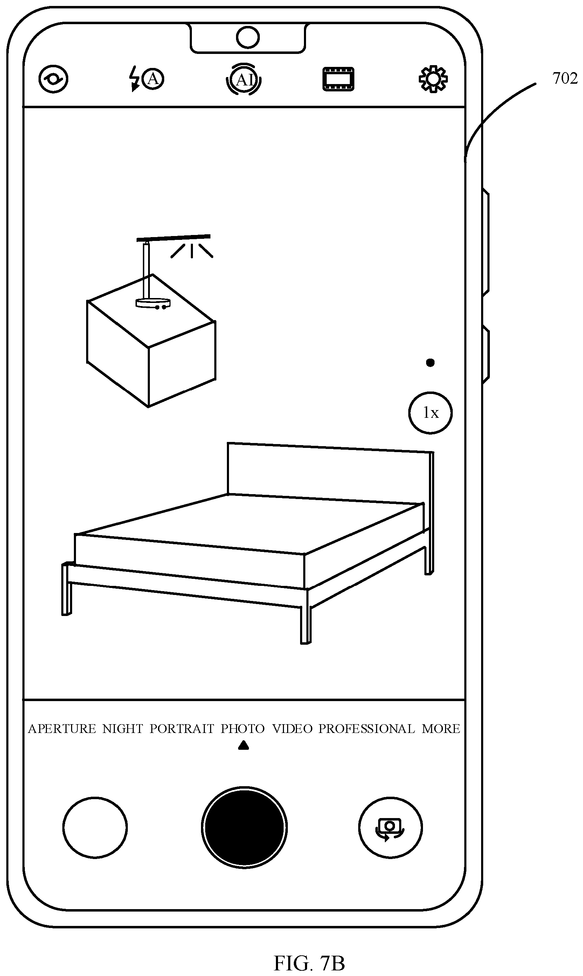

The dark light scene means that light intensity of an ambient light source existing in a shooting scene is relatively weak. For example, as shown in FIG. 7B, a mobile phone may display a shooting preview interface 702. An image captured by a camera of the mobile phone is displayed on the shooting preview interface 702. It may be learned from the shooting preview interface 702 that a location corresponding to a current shooting scene is a bedroom. If a current time is night, a light source of the bedroom includes only a table lamp (the table lamp may be located on a bedside table). Since light intensity of the table lamp is relatively weak, it may be considered that the current environment is dim.

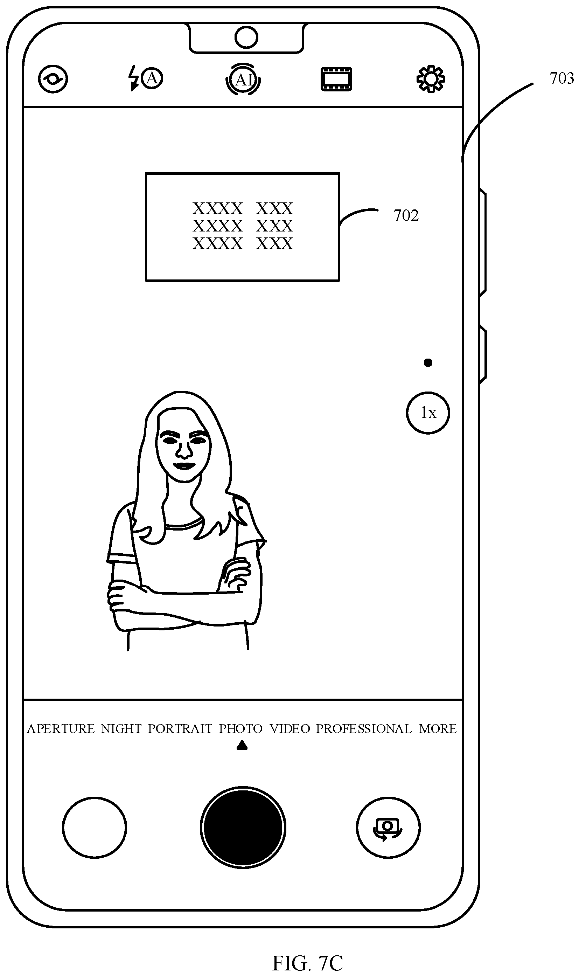

The high-frequency light source scene means that a flicker frequency of an ambient light source existing in a shooting scene is relatively high. For example, as shown in FIG. 7C, a mobile phone may display a shooting preview interface 703. An image captured by a camera of the mobile phone is displayed on the shooting preview interface 703. It may be learned from the shooting preview interface 703 that a location corresponding to a current shooting scene is a waiting room of a high-speed rail station, and the waiting room of the high-speed rail station includes a high-frequency display screen. It may be considered that the current scene is in a high-frequency light source scene.

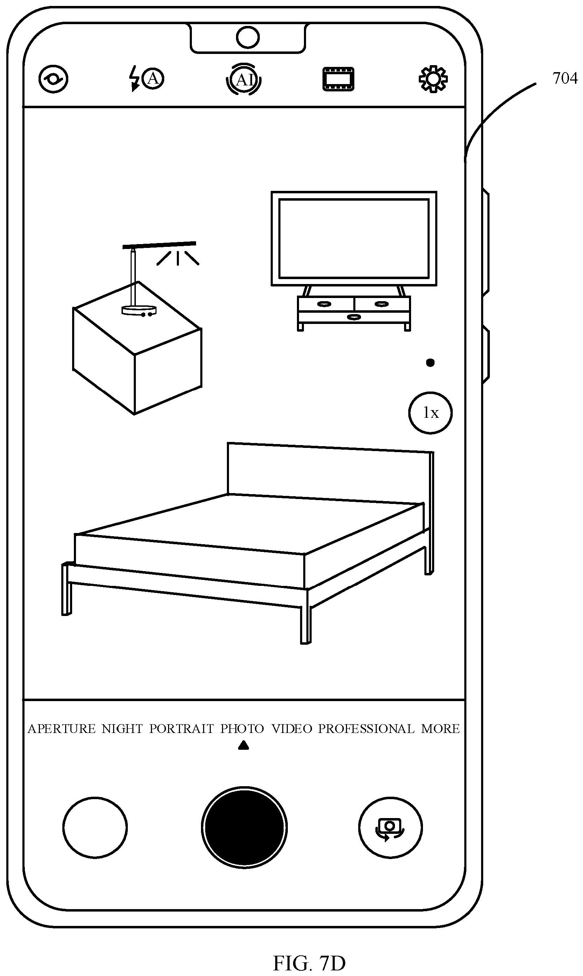

The mixed light source scene means that a plurality of ambient light sources exist in a shooting scene, and the plurality of ambient light sources have different flicker frequencies. For example, as shown in FIG. 7D, a mobile phone may display a shooting preview interface 704. An image captured by a camera of the mobile phone is displayed on the shooting preview interface 704. It may be learned from the shooting preview interface 704 that a location corresponding to a current shooting scene is a living room, and light sources of the living room include a display screen of a television and a table lamp. The display screen of the television and the table lamp have different flicker frequencies, that is, which are currently in a mixed light source scene.

It should be understood that, two or more of the local light source scene, the dark light scene, the high-frequency light source scene, and the mixed light source scene may exist simultaneously.

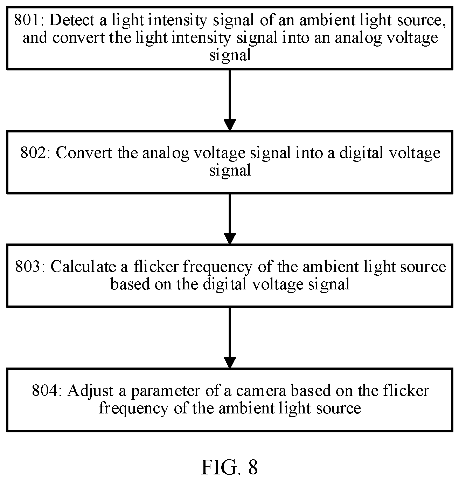

As shown in FIG. 8, an embodiment of this application provides a method for detecting a flicker frequency of an ambient light source, applied to an electronic device. The electronic device includes a light intensity sensing module, an analog-to-digital conversion module, and a data processing module. The light intensity sensing module is connected to the analog-to-digital conversion module. The analog-to-digital conversion module is connected to the data processing module. The method includes the following steps.

801: Detect a light intensity signal of an ambient light source, and convert the light intensity signal into an analog voltage signal.

The light intensity sensing module of the electronic device may detect the light intensity signal of the ambient light source through a PD, and convert the light intensity signal of the ambient light source into the analog voltage signal.

802: Convert the analog voltage signal into a digital voltage signal.

The analog-to-digital conversion module of the electronic device may convert the analog voltage signal into the digital voltage signal. For a specific process, reference may be made to the foregoing related description of the analog-to-digital conversion module, and details are not described herein.

803: Calculate a flicker frequency of the ambient light source based on the digital voltage signal.

The data processing module (for example, an audio DSP) of the electronic device may calculate the flicker frequency of the ambient light source based on the digital voltage signal. For a specific process, reference may be made to the foregoing related description of the data processing module, and details are not described herein.

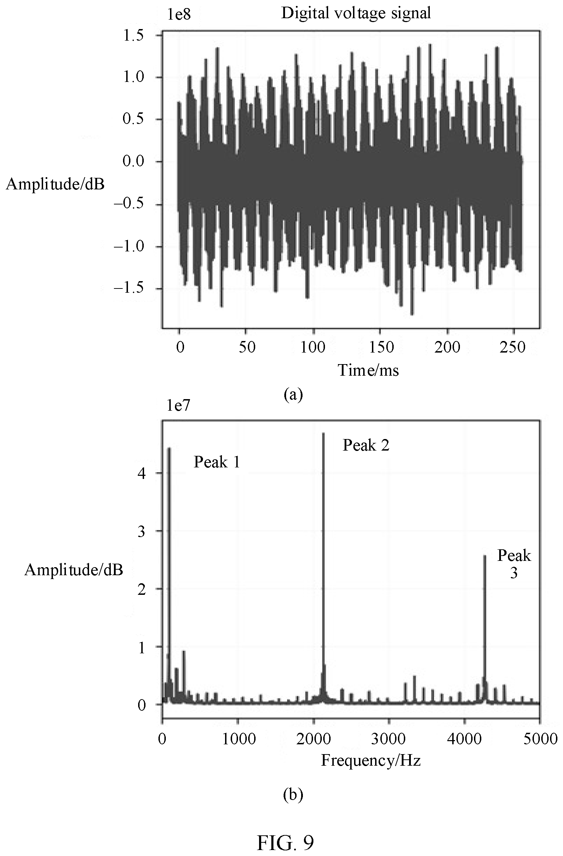

For example, as shown in (a) of FIG. 9, an example of a time-domain digital voltage signal received by a data processing module from an analog-to-digital conversion module is shown. An abscissa represents time, and the abscissa is in milliseconds (ms). An ordinate represents an amplitude, and the ordinate is in dB (decibel). After the data processing module performs FFT processing on the digital voltage signal shown in (a) of FIG. 9, a spectrogram shown in (b) of FIG. 9 may be obtained. The spectrogram is a logarithmic amplitude spectrogram. An abscissa represents a frequency, and the abscissa is in Hertz (Hz). An ordinate represents an amplitude, and the ordinate is in dB (decibel). After the data processing module performs FFT processing on the digital voltage signal, frequencies and amplitudes of a plurality of sine wave signals may be obtained. Further, the data processing module may determine a frequency of a target peak position based on a peak searching algorithm, and use the frequency of the target peak position as the flicker frequency of the ambient light source. The target peak position may be a peak position with an amplitude value (an amplitude) higher than a preset amplitude. For example, assuming that the preset amplitude value is 2, peak positions with the amplitude value higher than the preset amplitude value may include a peak 1, a peak 2, and a peak 3. To be specific, the target peak position includes the peak 1, the peak 2, and the peak 3. The peak 1, the peak 2, and the peak 3 respectively correspond to frequencies of 100 Hz, 2160 Hz, and 4200 Hz. To be specific, the flicker frequency of the ambient light source may include 100 Hz, 2160 Hz, and 4200 Hz.

804: Set a parameter of a camera based on the flicker frequency of the ambient light source.

Further, the data processing module (for example, an audio DSP) may send frequency information (flicker frequencies of one or more ambient light sources) to an application processor of the electronic device. The application processor may set/adjust the parameter of the camera based on the received frequency information, to eliminate water ripples.

The parameter of the camera includes an exposure time (which may also be referred to as a shutter time) and/or a frame rate (which may also be referred to as a frame interval).

In some embodiments, the application processor may determine a light source period based on a flicker frequency of a light source. The flicker frequency of the light source is a reciprocal of the light source period. The application processor may set the exposure time of the camera to an integer multiple of the light source period, or may set the frame rate of the camera to an integer multiple of the light source period, so as to eliminate the water ripples.

If a plurality of ambient light sources exist, and the plurality of ambient light sources have different light source periods, the application processor may set the exposure time or the frame rate of the camera based on a lowest common multiple of the light source periods of the plurality of ambient light sources. For example, the exposure time of the camera may be set to an integer multiple of the lowest common multiple of the light source periods of the plurality of ambient light sources, or the frame rate of the camera may be set to an integer multiple of the lowest common multiple of the light source periods of the plurality of ambient light sources, so as to eliminate the water ripples.

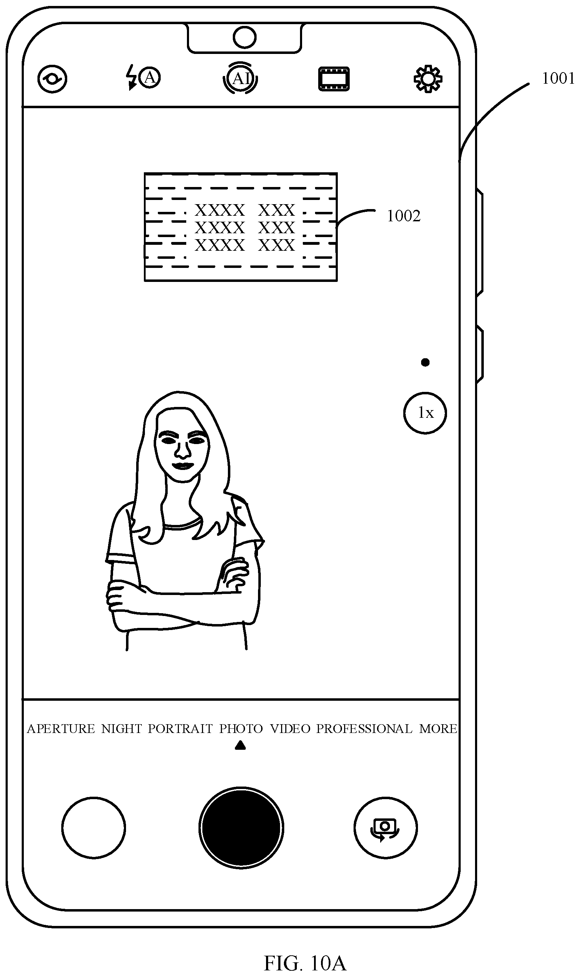

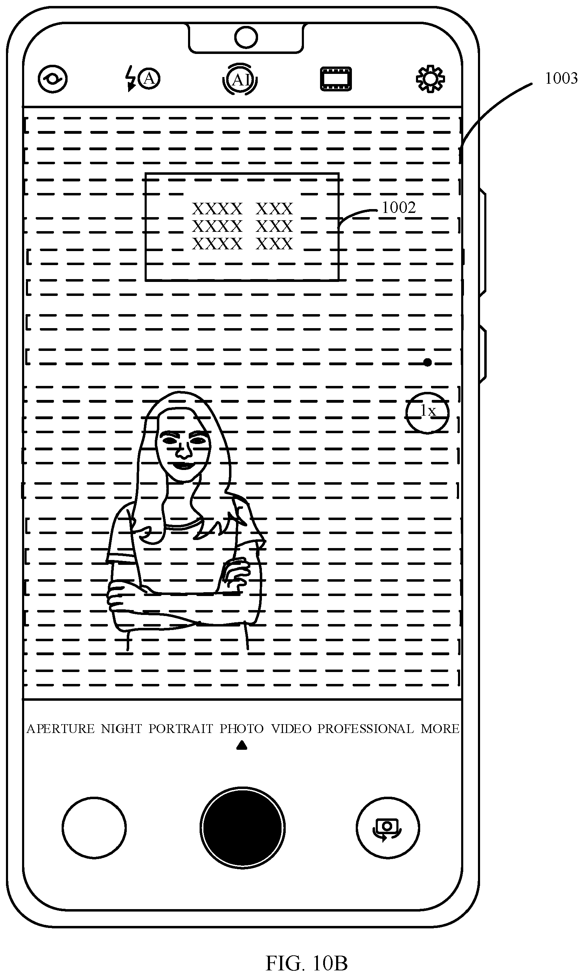

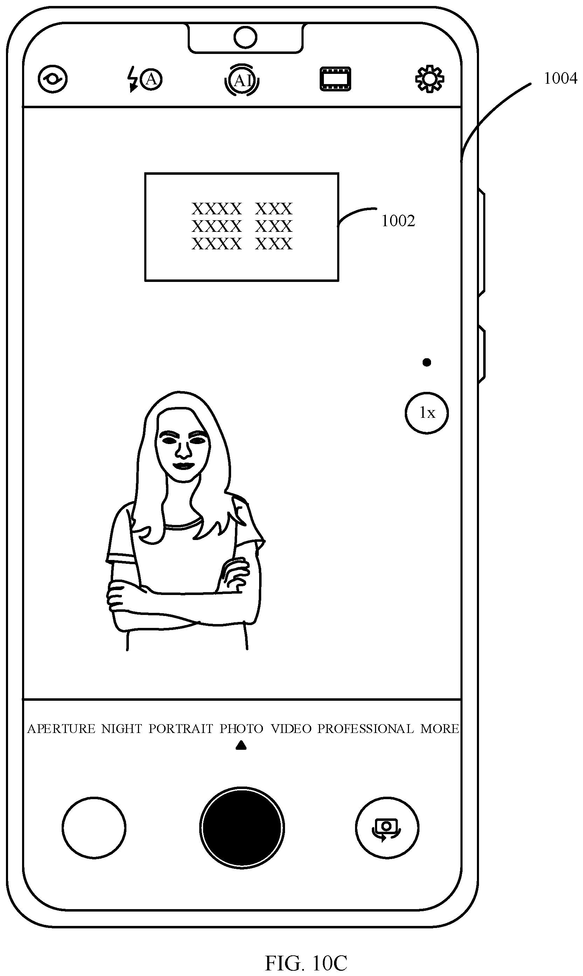

For example, it is assumed that a location corresponding to a current shooting scene is a waiting room of a high-speed rail station. The waiting room of the high-speed rail station includes a light source (for example, a train number display screen) flickering at a high frequency (a flicker frequency is higher than a preset threshold). To be specific, the current scene is a high-frequency light source scene. As shown in FIG. 10A, light emitted from a train number display screen 1002 is captured by a camera of an electronic device, water ripples may appear in a display region of the train number display screen 1002 on a shooting preview interface 1001, affecting user experience. In a possible case, if the light emitted from the train number display screen 1002 irradiates a surrounding reflector, and is captured by the camera of the electronic device, as shown in FIG. 10B, water ripples may appear in the entire display region of a shooting preview interface 1003, affecting user experience. The electronic device provided in embodiments of this application may detect a flicker frequency of the train number display screen 1002, and adjust the parameter (for example, an exposure time and/or a frame rate) of the camera based on the flicker frequency of the train number display screen 1002, thereby avoiding the water ripples. As shown in FIG. 10C, after the parameter (for example, the exposure time and/or the frame rate) of the camera is adjusted based on the flicker frequency of the train number display screen 1002 (for example, the exposure time of the camera is set to an integer multiple of a light source period), the electronic device may display a shooting preview interface 1004, and no water ripple exist on the shooting preview interface 1004, thereby enhancing user experience.

In the solution provided in this application, an audio codec or an ADC may be multiplexed to process an analog signal (an analog voltage signal corresponding to a light intensity signal of an ambient light source). Since the audio codec or the ADC has a high sampling rate (for example, the sampling rate may be 8-192 KHz), high quantization precision (for example, quantization precision > = 24 Bit), and a low-frequency cut-off function (that is, which may block a low-frequency DC signal), the flicker frequency of the ambient light source in the scene such as the local light source scene, the dark light scene, the high-frequency light source scene, or the mixed light source scene may be effectively detected.

However, in the related art, an electronic device detects a flicker frequency of an ambient light source through an integrated ambient light sensor. Since the integrated ambient light sensor has relatively low precision and a relatively low sampling rate, an effect of detecting a frequency of a light source signal is poor (for example, flicker frequencies of some light source signals (for example, a high-frequency light source and a local light source) cannot be detected).

As shown in Table 1, detection cases of the flicker frequency of the ambient light source in different scenes using the related technical solutions and the solution of this application are shown.

**Table 1**

| Scene classification | Scene description | Illuminance | Solution in the related art | Solution of this application |
|---|---|---|---|---|
| Local light source scene | A viewfinder frame of the electronic device includes a display screen | 40 lux | Detected | Detected |
| Dark light scene | A viewfinder frame of the electronic device includes a dark light strobe light source | 10 lux | Not detected | Detected |
| Local + high-frequency scene | A viewfinder frame of the electronic device includes a high-frequency LED large screen of a high-speed rail station | 400 lux | Not detected | Detected |
| Local + high-frequency scene | A viewfinder frame of an electronic device includes a display screen of another electronic device (for example, an OLED screen of a mobile phone) | 400 lux | Not detected | Detected |

The solution provided in this application is different from the solution used in the related art in which a flicker frequency of an ambient light source is detected through an integrated ambient light sensor. In the solution provided in this application, segmented processing is used during detection of the flicker frequency of the ambient light source. The light intensity signal of the ambient light source is detected through the light intensity sensing module, and the light intensity signal is converted into an analog voltage signal. The analog voltage signal is then isolated, amplified, sampled, quantized, and encoded through the audio module (for example, an audio codec or ADC) of the electronic device, to obtain a digital voltage signal. Due to the high precision and the high sampling rate of the audio codec or the ADC, the flicker frequency of the ambient light source can be detected more accurately. In addition, in this application, the audio codec or the ADC is multiplexed when the flicker frequency of the ambient light source is detected, without adding additional costs. To be specific, the solution provided in this application has high detection precision and low costs.

In addition, the audio module (for example, the audio codec or the ADC) and the data processing module (for example, the audio DSP) may be multiplexed to implement a function of a spectrum analyzer. The spectrum analyzer may be configured to perform frequency domain analysis on an analog signal (for example, a light intensity signal or a temperature signal), for example, to determine power and a frequency of the analog signal. For example, the audio codec or the ADC may be multiplexed to process an analog voltage signal corresponding to a light intensity signal of an ambient light source to obtain a digital voltage signal, and then the data processing module (for example, the audio DSP) performs FFT processing on the digital voltage signal to obtain a spectrogram of the light intensity signal.

An embodiment of this application provides an electronic device. The electronic device may include an audio chip, a light intensity sensing module (a PD photoelectric detection circuit), a memory, and one or more processors (for example, an ADSP and an application processor AP). The audio chip, the light intensity sensing module, the memory, and the processor are coupled. The memory is configured to store computer program code. The computer program code includes a computer instruction. When the processor executes the computer instruction, the electronic device may perform each function or step performed by the electronic device in foregoing method embodiments. For a structure of the electronic device, reference may be made to the structure of the electronic device shown in FIG. 2 or FIG. 3.

A software system of the electronic device may use a layered architecture, an event-driven architecture, a microkernel architecture, a microservice architecture, or a cloud architecture. In this embodiment of this application, the software structure of the electronic device 100 is described through examples by using an Android^{®} system with a layered architecture as an example.

In the layered architecture, software is divided into several layers, and each layer has a clear role and division of labor. The layers communicate with each other through an interface. In some embodiments, the Android^{®} system may include an application layer, an application framework layer, Android runtime (Android runtime), a system library, a hardware abstraction layer (hardware abstraction layer, HAL), and a kernel layer. It should be noted that the Android^{®} system is used as an example for description in this embodiment of this application. In another operating system (for example, an iOS system), the solution of this application can also be implemented as long as the functions implemented by the functional modules are similar to those implemented in this embodiment of this application.

The application layer may include a series of application packages.

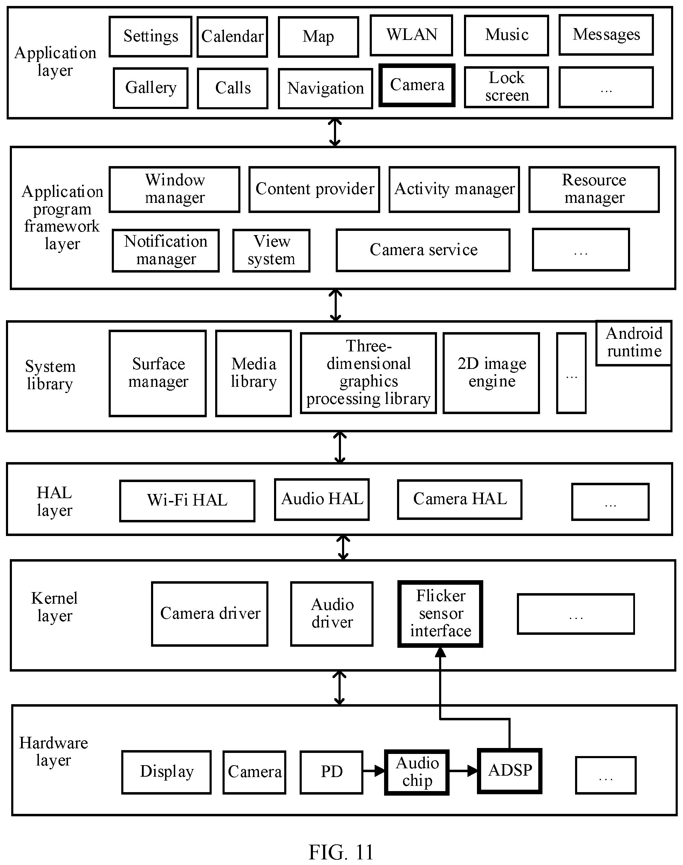

As shown in FIG. 11, the application packages may include applications such as Camera, Gallery, Calendar, Phone, Maps, Navigation, a wireless local area network (wireless local area network, WLAN), Bluetooth, Music, Videos, Messages, a lock screen application, and Settings. Certainly, the application layer may further include other application packages such as a payment application, a shopping application, a bank application, a chat application, or a financial application. This is not limited in this application.

A camera application has functions such as shooting and video recording. In response to an operation of opening the camera application by a user, the electronic device may perform shooting or video recording.

The application framework layer provides an application programming interface (application programming interface, API) and a programming framework for applications at the application layer. The application framework layer includes some predefined functions. For example, the application framework layer may include an activity manager, a window manager, a content provider, a view system, a resource manager, a notification manager, a camera service (Camera Service), and the like. This is not limited in this embodiment of this application.

The Camera Service may be started in a power-on phase of the electronic device, and may be used to transmit and save camera-related information.

The system library may include a plurality of functional modules, for example, a surface manager (surface manager), a media library (Media Library), a three-dimensional graphics processing library (for example, an OpenGL ES), or a 2D graphics engine (for example, an SGL).

The surface manager is configured to manage a display subsystem, and provide fusion of 2D layers and 3D layers for a plurality of applications.

The media library supports playback and recording in a plurality of common audio and video formats, static image files, and the like. The media library may support a plurality of audio and video encoding formats such as MPEG4, H.264, MP3, AAC, AMR, JPG, and PNG.

The OpenGL ES is configured to implement three-dimensional graphics drawing, image rendering, synthesis, layer processing, and the like.

The SGL is a drawing engine for 2D drawing.

The Android runtime (Android Runtime) includes a core library and a virtual machine. The Android Runtime is responsible for scheduling and managing the Android system. The core library includes two parts: one part is a performance function that the Java language needs to call, and the other part is a core library of Android. The application layer and the application framework layer are run in the virtual machine. The virtual machine executes Java files of the application layer and the application framework layer as binary files. The virtual machine is configured to execute functions such as object lifecycle management, stack management, thread management, security and exception management, and garbage collection.

The HAL layer is a package for a Linux kernel driver. It provides an interface to a higher-level layer, and shields implementation details of underlying hardware.

The HAL layer may include a Wi-Fi HAL, an audio (audio) HAL, a camera HAL, and the like.

The camera HAL is a core software framework of a camera (Camera).

The kernel layer is a layer between hardware and software. The kernel layer includes at least a display driver, a camera driver, an audio driver, a sensor driver, and the like. The camera driver is a driver layer of a Camera device and is mainly responsible for interaction with hardware.

In this embodiment of this application, the kernel layer may further include a flicker frequency interface. The flicker frequency interface is configured to interact with the ADSP, obtain a flicker frequency of an ambient light source from the ADSP, and transfer the flicker frequency to an upper layer application. The upper-layer application (for example, a camera application) may set a parameter (for example, an exposure time) of a camera based on the flicker frequency of the ambient light source to eliminate water ripples.

The hardware layer includes a display, a camera, a PD photoelectric detection circuit (referred to as PD in the figure), an audio chip, an ADSP, and the like.

The PD photoelectric detection circuit may be configured to detect the light intensity signal of the ambient light source and convert the light intensity signal into an analog voltage signal. The audio chip may receive the analog voltage signal from the PD photoelectric detection circuit and convert the analog voltage signal into a digital voltage signal. The ADSP may process the digital voltage signal through an FFT algorithm to obtain the flicker frequency of the ambient light source (flicker frequencies of one or more ambient light sources).

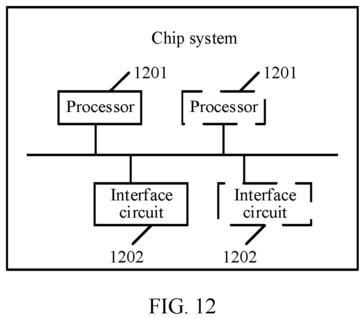

An embodiment of this application further provides a chip system (for example, a system on a chip (system on a chip, SoC)). As shown in FIG. 12, the chip system includes at least one processor 1201 and at least one interface circuit 1202. The processor 1201 and the interface circuit 1202 may be connected through a line. For example, the interface circuit 1202 may be configured to receive a signal from another apparatus (for example, a memory of an electronic device). For another example, the interface circuit 1202 may be configured to send a signal to another apparatus (for example, the processor 1201 or a touch screen of the electronic device). For example, the interface circuit 1202 may read an instruction stored in the memory and send the instruction to the processor 1201. When the instruction is executed by the processor 1201, the electronic device may be enabled to perform the steps in the foregoing embodiments. Certainly, the chip system may further include another discrete device. This is not specifically limited in embodiments of this application.

An embodiment of this application further provides a computer-readable storage medium. The computer-readable storage medium includes a computer instruction. When the computer instruction is run on the foregoing electronic device, the electronic device is enabled to perform the functions or steps performed by the electronic device in the foregoing method embodiment.

Through the descriptions of the foregoing implementations, a person skilled in the art may clearly understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above.

In several embodiments provided in this application, it should be understood that the disclosed apparatus and method may be implemented in other manners. For example, the described apparatus embodiment is merely an example. For example, the module or unit division is merely logical function division and may be another division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect coupling or communication connection between the apparatuses or units may be implemented in electronic, mechanical, or other forms.

The units described as separate parts may or may not be physically separate, and a component displayed as a unit may be one physical unit or a plurality of physical units, may be located in one pace, or may be distributed in different places. Some or all of the units may be selected based on actual requirements to achieve the objectives of the solutions of embodiments.

In addition, functional units in embodiments of this application may be integrated into one processing unit, or each of the units may be physically separated, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in embodiments of this application. The foregoing storage medium includes: various media that can store program code, such as a USB flash drive, a removable hard disk, a read only memory (read only memory, ROM), a random access memory (random access memory, RAM), a magnetic disk, or a compact disc.

The foregoing content is merely specific implementations of this application, but the protection scope of this application is not limited thereto. Any variation or replacement made within the technical scope disclosed in this application shall fall within the protection scope of this application. Therefore, the protection scope of this application shall be subject to the protection scope of the claims.

## Claims

1. An electronic device, comprising: a light intensity sensing module, an analog-to-digital conversion module, and a data processing module, wherein the light intensity sensing module is connected to the analog-to-digital conversion module, and the analog-to-digital conversion module is connected to the data processing module;
the light intensity sensing module comprises a photodiode, and the light intensity sensing module is configured to detect a light intensity signal of an ambient light source and convert the light intensity signal into an analog voltage signal;
the analog-to-digital conversion module is configured to convert the analog voltage signal into a digital voltage signal, the analog-to-digital conversion module is an audio chip, and the audio chip is connected to a microphone and/or a loudspeaker; and
the data processing module is configured to calculate a flicker frequency of the ambient light source based on the digital voltage signal.

2. The electronic device according to claim 1, further comprising an application processor AP, and a camera, wherein
the data processing module is further configured to send the flicker frequency of the ambient light source to the AP; and
the AP is configured to set a parameter of the camera based on the flicker frequency of the ambient light source, and the parameter of the camera comprises an exposure time and/or a frame rate.

3. The electronic device according to claim 1 or 2, wherein
the audio chip comprises an audio codec or an audio analog-to-digital converter ADC.

4. The electronic device according to claim 2 or 3, wherein
the data processing module is an audio digital signal processor.

5. The electronic device according to any one of claims 1 to 4, wherein
the analog-to-digital conversion module is configured to perform high-pass filtering processing on the analog voltage signal to obtain an alternating current (AC) voltage signal, then amplify the AC voltage signal, and perform analog-to-digital conversion on the amplified AC voltage signal to obtain the digital voltage signal.

6. The electronic device according to any of claims 1 to 5, wherein the light intensity sensing module comprises the photodiode, a first sampling resistor, a first capacitor, and a second capacitor; and
a cathode of the photodiode is connected to a bias voltage, an anode of the photodiode is connected to one end of the first sampling resistor, an other end of the first sampling resistor is DC-grounded, one end of the second capacitor is connected to the anode of the photodiode, an other end of the second capacitor is AC-grounded, one end of the first capacitor is connected to the other end of the first sampling resistor, and an other end of the first capacitor is AC-grounded.

7. The electronic device according to claim 6, wherein the light intensity sensing module further comprises a first magnetic bead and a second magnetic bead; and
an end of the first magnetic bead is connected to the end of the second capacitor and the anode of the photodiode, and an end of the second magnetic bead is connected to the end of the first capacitor and the other end of the first sampling resistor.

8. The electronic device according to any one of claims 1 to 5, wherein
the light intensity sensing module comprises the photodiode, a second sampling resistor, and a first operational amplifier, a cathode of the photodiode is connected to one end of the second sampling resistor and an inverting input terminal of the first operational amplifier, an anode of the photodiode is grounded, an other end of the second sampling resistor is connected to an output terminal of the first operational amplifier, and a non-inverting input terminal of the first operational amplifier is grounded.

9. The electronic device according to any one of claims 1 to 5, wherein
the light intensity sensing module comprises the photodiode, a second operational amplifier, and a charging capacitor, a cathode of the photodiode is connected to one end of the charging capacitor and an inverting input terminal of the second operational amplifier, an anode of the photodiode is grounded, an other end of the charging capacitor is connected to an output terminal of the second operational amplifier, and a non-inverting input terminal of the second operational amplifier is connected to a bias voltage.

10. The electronic device according to any one of claims 1 to 9, wherein
the analog-to-digital conversion module comprises a high-pass filter, a programmable gain amplifier PGA, an analog-to-digital converter, and a data transmission module, an input terminal of the high-pass filter is connected to an output terminal of the light intensity sensing module, an output terminal of the high-pass filter is connected to an input terminal of the PGA, an output terminal of the PGA is connected to an input terminal of the analog-to-digital converter, an output terminal of the analog-to-digital converter is connected to an input terminal of the data transmission module, and an output terminal of the data transmission module is connected to the data processing module;
the high-pass filter is configured to receive the analog voltage signal from the output terminal of the light intensity sensing module;
the high-pass filter is configured to perform filtering on a direct current (DC) voltage signal of the analog voltage signal to obtain an AC voltage signal;
the PGA is configured to amplify the AC voltage signal;
the analog-to-digital converter is configured to convert the amplified AC voltage signal into a digital voltage signal; and
the data transmission module is configured to send the digital voltage signal to the data processing module through a bus.

11. The electronic device according to any one of claims 1 to 9, wherein
the analog-to-digital conversion module comprises a programmable gain amplifier PGA, an analog-to-digital converter, and a data transmission module, an input terminal of the PGA is connected to an output terminal of the light intensity sensing module, an output terminal of the PGA is connected to an input terminal of the analog-to-digital converter, an output terminal of the analog-to-digital converter is connected to an input terminal of the data transmission module, and an output terminal of the data transmission module is connected to the data processing module;
the PGA is configured to receive the analog voltage signal from the output terminal of the light intensity sensing module, and amplify the analog voltage signal;
the analog-to-digital converter is configured to convert the amplified analog voltage signal into the digital voltage signal; and
the data transmission module is configured to send the digital voltage signal to the data processing module through a bus.

12. An apparatus for detecting a flicker frequency of an ambient light source, comprising: a light intensity sensing module, an analog-to-digital conversion module, and a data processing module, wherein the light intensity sensing module is connected to the analog-to-digital conversion module, and the analog-to-digital conversion module is connected to the data processing module;
the light intensity sensing module comprises a photodiode, and the light intensity sensing module is configured to detect a light intensity signal of an ambient light source, and convert the light intensity signal into a voltage signal;
the analog-to-digital conversion module is configured to convert the analog voltage signal into a digital voltage signal; and
the data processing module is configured to calculate a flicker frequency of the ambient light source based on the digital voltage signal.

13. The apparatus according to claim 12, wherein
the analog-to-digital conversion module is configured to perform high-pass filtering processing on the analog voltage signal to obtain an AC voltage signal, then amplify the AC voltage signal, and perform analog-to-digital conversion on the amplified AC voltage signal to obtain the digital voltage signal.

14. The apparatus according to claim 12 or 13, wherein the light intensity sensing module comprises the photodiode, a first sampling resistor, a first capacitor, and a second capacitor; and
a cathode of the photodiode is connected to a bias voltage, an anode of the photodiode is connected to one end of the first sampling resistor, an other end of the first sampling resistor is DC-grounded, one end of the second capacitor is connected to the anode of the photodiode, an other end of the second capacitor is AC-grounded, one end of the first capacitor is connected to the other end of the first sampling resistor, and an other end of the first capacitor is AC-grounded.

15. The apparatus according to claim 14, wherein the light intensity sensing module further comprises a first magnetic bead and a second magnetic bead; and
an end of the first magnetic bead is connected to the end of the second capacitor and the anode of the photodiode, and an end of the second magnetic bead is connected to the end of the first capacitor and the other end of the first sampling resistor.

16. The apparatus according to claim 12 or 13, wherein
the light intensity sensing module comprises the photodiode, a second sampling resistor, and a first operational amplifier, a cathode of the photodiode is connected to one end of the second sampling resistor and an inverting input terminal of the first operational amplifier, an anode of the photodiode is grounded, an other end of the second sampling resistor is connected to an output terminal of the first operational amplifier, and a non-inverting input terminal of the first operational amplifier is grounded.

17. The apparatus according to claim 12 or 13, wherein
the light intensity sensing module comprises the photodiode, a second operational amplifier, and a charging capacitor, a cathode of the photodiode is connected to one end of the charging capacitor and an inverting input terminal of the second operational amplifier, an anode of the photodiode is grounded, an other end of the charging capacitor is connected to an output terminal of the second operational amplifier, and a non-inverting input terminal of the second operational amplifier is connected to a bias voltage.

18. The apparatus according to any one of claims 12 to 17, wherein
the analog-to-digital conversion module comprises a high-pass filter, a programmable gain amplifier PGA, an analog-to-digital converter, and a data transmission module, an input terminal of the high-pass filter is connected to an output terminal of the light intensity sensing module, an output terminal of the high-pass filter is connected to an input terminal of the PGA, an output terminal of the PGA is connected to an input terminal of the analog-to-digital converter, an output terminal of the analog-to-digital converter is connected to an input terminal of the data transmission module, and an output terminal of the data transmission module is connected to the data processing module;
the high-pass filter is configured to receive the analog voltage signal from the output terminal of the light intensity sensing module;
the high-pass filter is configured to perform filtering on a DC voltage signal of the analog voltage signal to obtain an AC voltage signal;
the PGA is configured to amplify the AC voltage signal;
the analog-to-digital converter is configured to convert the amplified AC voltage signal into a digital voltage signal; and
the data transmission module is configured to send the digital voltage signal to the data processing module through a bus.

19. The apparatus according to any one of claims 12 to 17, wherein
the analog-to-digital conversion module comprises a programmable gain amplifier PGA, an analog-to-digital converter, and a data transmission module, an input terminal of the PGA is connected to an output terminal of the light intensity sensing module, an output terminal of the PGA is connected to an input terminal of the analog-to-digital converter, an output terminal of the analog-to-digital converter is connected to an input terminal of the data transmission module, and an output terminal of the data transmission module is connected to the data processing module;
the PGA is configured to receive the analog voltage signal from the output terminal of the light intensity sensing module, and amplify the analog voltage signal;
the analog-to-digital converter is configured to convert the amplified analog voltage signal into the digital voltage signal; and
the data transmission module is configured to send the digital voltage signal to the data processing module through a bus.

20. A method for detecting a flicker frequency of an ambient light source, wherein the method is applied to an electronic device, the electronic device comprises a light intensity sensing module, an analog-to-digital conversion module, and a data processing module, the light intensity sensing module comprises a photodiode, the light intensity sensing module is connected to the analog-to-digital conversion module, the analog-to-digital conversion module is connected to the data processing module, and the method comprises:
detecting, by the light intensity sensing module, a light intensity signal of an ambient light source, and converting the light intensity signal into a voltage signal;
converting, by the analog-to-digital conversion module, the voltage signal into a digital voltage signal, wherein the analog-to-digital conversion module is an audio chip, and the audio chip is connected to a microphone and/or a loudspeaker; and
calculating, by the data processing module, a flicker frequency of the ambient light source based on the digital voltage signal.
